# EUROPEAN PATENT SPECIFICATION

(11) **EP 4 002 734 B1**
(45) Date of publication and mention of the grant of the patent: **25.02.2026**
(21) Application number: 21208823.1
(22) Date of filing: 17.11.2021
(51) Int. Cl.: H04L 1/1607, H04L 1/1806, H04L 1/1809, H04L 1/1829, H04L 1/1867

(54) **SELECTIVE RETRANSMISSION OF PACKETS**
SELEKTIVE RÜCKÜBERTRAGUNG VON PAKETEN
RETRANSMISSION SÉLECTIVE DE PAQUETS

(30) Priority: 19.11.2020 CN 202011302227; 01.12.2020 US 202017107990
(43) Date of publication of application: 25.05.2022
(73) Proprietor: Mellanox Technologies, Ltd., 2069200 Yokneam (IL)
(72) Inventor: BURSTEIN, Idan, 2069200 Yokneam (IL); MOYAL, Roee, 2069200 Yokneam (IL); SHAHAR, Ariel, 2069200 Yokneam (IL); BLOCH, Noam, 2069200 Yokneam (IL); KOREN, Ran, 2069200 Yokneam (IL)
(74) Representative: Kramer, Dani

(56) References cited:
- EP-A1- 1 193 903
- WO-A2-02/23791

## Description

### FIELD OF THE INVENTION

The present invention relates generally to computer systems, and particularly to data exchange over a network among computers by remote direct memory access (RDMA).

### BACKGROUND

Some packet transport protocols, such as the Transmission Control Protocol (TCP), use a mechanism of acknowledgment (ACK) and retransmission to ensure that messages are delivered reliably in their entirety. The receiver of packets on a TCP connection sends ACK packets back to the transmitter to indicate which data packets it has received. When the transmitter fails to receive a positive acknowledgment within a certain timeout period, it retransmits the unacknowledged packet or packets.

A selective acknowledgment (SACK) mechanism for TCP was defined by Mathis et al., in "TCP Selective Acknowledgment Options," published as Request for Comments (RFC) 2018 by the Internet Engineering Task Force (IETF), October 1996. According to the authors, with selective acknowledgments, the data receiver can inform the sender about all segments that have arrived successfully, so the sender need retransmit only the segments that have actually been lost.

RDMA protocols enable the network interface controller (NIC) of one computer to read and write data over a network from and to the memory of another computer by transmitting and receiving packets over the network without involving the operating system of either computer in the memory access operations. These RDMA transactions are typically performed in response to work requests submitted to the NIC by application processes running on the host processor, and thus enable applications on different nodes of the network to exchange data efficiently, with high bandwidth and low latency. (The term "transaction" is used in the context of the present description and in the claims to refer to an operation in which a selected range of data is transferred from the memory of one computer to the memory of another computer by transmission of packets over a network between the respective NICs of the computers.) Common RDMA transactions include RDMA Write and Send operations, in which data are transferred from the memory of a requesting computer to the memory of a receiving computer (referred to as the "requester" and the "responder," respectively), and RDMA Read operations, in which the responder transfers data to the requester. In RDMA Write operations, the requester specifies the memory range to which the data are to be written by the responder; whereas in Send operations, the memory range is specified by a work request (known as a work queue element, or "WQE") submitted from the host processor to the NIC of the responder.

A number of RDMA protocols are known in the art, such as the InfiniBand^{™} (IB) RDMA protocols that are used over IB switch fabrics, and RDMA over Converged Ethernet (RoCE), which is designed to run over Ethernet networks. In RoCE, the IB RDMA layer runs directly over the Ethernet link layer (in RoCE version 1) or over the User Datagram Protocol (UDP) transport layer on Internet Protocol (IP) networks (in RoCE version 2).

U.S. Patent 10,430,374, describes a method for data transfer, which includes transmitting a sequence of data packets, including at least a first packet and a second packet transmitted subsequently to the first packet, from a first computer over a network to a second computer in a single remote direct memory access (RDMA) data transfer transaction. Upon receipt of the second packet at the second computer without previously having received the first packet, a negative acknowledgment (NAK) packet is sent from the second computer over the network to the first computer, indicating that the first packet was not received. In response to the NAK packet, the first packet is retransmitted from the first computer to the second computer without retransmitting the second packet.

EP1193903A1 describes a data transmission system having a first station and a second station, the first station acting to divide data into a plurality of sections and thereafter add sequential transmission number thereto to create a frame or frames to transmit the same, and the second station acting to receive the frame or frames. Also, in the case where the second station cannot receive several frames normally, the number of frames, on which an error is caused, being consecutive is compared with a threshold. In the case where the number is equal to or more than the threshold, the second station demands from the first station re-transmission in the GBN mode, in which all data numbered subsequent to a specified transmission number are transmitted, and in the case where the number is less than the threshold, the second station demands from the first station re-transmission in the SR mode, in which only a specified transmission number is transmitted. In addition, the threshold is set to be optimum taking account of a resource and performances in accordance with a status of data transmission.

WO 02/23791 A2 describes an automatic retransmission protocol between one broadcast unit and a plurality of receiving units is achieved by assigning an ARQ scheme to the broadcast unit and receiving units. A plurality of return windows are assigned for transmitting return messages from the corresponding plurality of receiving units to the broadcast unit. The broadcast unit broadcasts a packet simultaneously to the plurality of receiving units. The broadcast unit receives the return messages from the plurality of receiving units and forms a composite acknowledgement from the return messages. Then, the broadcast unit retransmits at least portion of the packet, that is not acknowledged by the composite acknowledgement, simultaneously to all of the receiving units.

### SUMMARY

The invention is defined by the claims. In order to illustrate the invention, aspects and embodiments which may or may not fall within the scope of the claims are described herein.
Embodiments of the present invention that are described hereinbelow provide methods and apparatus that facilitate efficient RDMA data transfer.

There is therefore provided, in accordance with an embodiment of the invention, a method for data transfer, which includes transmitting a sequence of data packets, including at least a first packet and a second packet transmitted subsequently to the first packet, from a first computer over a network to a second computer in a single remote direct memory access (RDMA) data transfer transaction of a given type, selected from among first and second types of transactions. Upon receipt of the second packet at the second computer without previously having received the first packet, a negative acknowledgment (NAK) packet is sent from the second computer over the network to the first computer, indicating that the first packet was not received. A retransmission mode is selected responsively to the type of the transaction, such that when the transaction is of the first type, the first packet is retransmitted from the first computer to the second computer in response to the NAK packet without retransmitting the second packet, and when the transaction is of the second type, both the first and second packets are retransmitted from the first computer to the second computer in response to the NAK packet. In response to the NAK packet, one or more of the data packets are retransmitted from the first computer to the second computer in accordance with the selected retransmission mode.

In the disclosed embodiments, the transactions of the first type include RDMA Write and Read transactions, and the transactions of the second type include Send transactions. In one embodiment, the transactions of the second type further include RDMA Write with Immediate transactions. Additionally or alternatively, the transactions of the first type further include RDMA Atomic transactions.

In one embodiment, transmitting the sequence of the data packets includes, after retransmitting the first packet in the transaction of the first type, completing the RDMA data transfer transaction by transmitting at least a third packet subsequent to the second packet in the sequence from the first computer to the second computer.

Additionally or alternatively, retransmitting the one or more of the data packets includes, after retransmitting the first packet in the transaction of the second type, retransmitting all of the data packets in the sequence, including the second packet, that were transmitted following the first packet.

Typically, the NAK packet indicates a first packet serial number of the first packet. In a disclosed embodiment, retransmitting the one or more of the data packets includes retransmitting both the first packet and at least a third packet having a third packet serial number higher than the first packet serial number so as to cause the second computer to acknowledge receipt of the third packet.

In a disclosed embodiment, the first and second computers are connected to the network by respective first and second network interface controllers (NICs), and selecting the retransmission mode includes deciding which of the packets are to be retransmitted responsively to a capability of the second NIC to handle the data packets that are received out of order. Additionally or alternatively the method includes, when the transaction is of the second type, discarding the second packet that was received without previously having received the first packet, and writing the data from both the first and second packets to the memory of the second computer after receiving the retransmitted first and second packets.

There is also provided, in accordance with an embodiment of the invention, data transfer apparatus, including a first network interface controller (NIC), which couples a first computer to a network and is configured to transmit a sequence of data packets, including at least a first packet and a second packet transmitted subsequently to the first packet, from a first computer over a network to a second computer in a single remote direct memory access (RDMA) data transfer transaction of a given type, selected from among first and second types of transactions. A second NIC couples the second computer to the network and is configured to send, upon receipt of the second packet without previously having received the first packet, a negative acknowledgment (NAK) packet over the network to the first computer, indicating that the first packet was not received. The first NIC is configured to select a retransmission mode responsively to the type of the transaction, such that when the transaction is of the first type, the first NIC retransmits the first packet in response to the NAK packet without retransmitting the second packet, and when the transaction is of the second type, the first NIC retransmits both the first and second packets in response to the NAK packet, and to retransmit one or more of the data packets in response to the NAK packet in accordance with the selected retransmission mode.

In the disclosed embodiments, the transactions of the first type comprise RDMA Write and Read transactions, and the transactions of the second type comprise Send transactions. In one embodiment, the transactions of the second type further comprise RDMA Write with Immediate transactions. Additionally or alternatively, the transactions of the first type further comprise RDMA Atomic transactions.

In one embodiment, the first NIC is configured, after retransmitting the first packet in the transaction of the first type, to complete the RDMA data transfer transaction by transmitting at least a third packet subsequent to the second packet in the sequence to the second computer.

Additionally or alternatively, the first NIC is configured, after retransmitting the first packet in the transaction of the second type, to retransmit all of the data packets in the sequence, including the second packet, that were transmitted following the first packet.

Typically, the NAK packet indicates a first packet serial number of the first packet, and wherein the first NIC is configured to retransmit both the first packet and at least a third packet having a third packet serial number higher than the first packet serial number so as to cause the second NIC to acknowledge receipt of the third packet.

In a disclosed embodiment, the first NIC is configured to select the retransmission mode responsively to a capability of the second NIC to handle the data packets that are received out of order. Additionally or alternatively, the second NIC is configured, when the transaction is of the first type, to write data from the second packet to a memory of the second computer before receiving the retransmitted first packet, and when the transaction is of the second type, to discard the second packet that was received without previously having received the first packet, and to write the data from both the first and second packets to the memory of the second computer after receiving the retransmitted first and second packets.

In an embodiment, a method for data transfer includes transmitting a sequence of data packets from a first computer over a network to a second computer in a single RDMA data transfer transaction. Upon receipt of a second packet in the sequence without previously having received the first packet, the second computer sends a NAK packet over the network to the first computer, indicating that the first packet was not received. A retransmission mode is selected responsively to the type of the transaction, such that when the transaction is of a first type, the first packet is retransmitted from the first computer to the second computer in response to the NAK packet without retransmitting the second packet, and when the transaction is of a second type, both the first and second packets are retransmitted from the first computer to the second computer in response to the NAK packet.

The present invention will be more fully understood from the following detailed description of the embodiments thereof, taken together with the drawings in which:

### BRIEF DESCRIPTION OF THE DRAWINGS

Fig. 1 is block diagram that schematically illustrates a computer system, in accordance with an embodiment of the invention;
Fig. 2 is a block diagram that schematically shows details of a host computer with a network interface controller (NIC), in accordance with an embodiment of the invention; and
Figs. 3-6 are ladder diagrams that schematically illustrate methods for selective acknowledgment and retransmission of RDMA packets, in accordance with embodiments of the invention.

### DETAILED DESCRIPTION OF EMBODIMENTS

### OVERVIEW

Performance of RDMA transactions can be sensitive to packet loss, and RDMA protocols such as the IB and RoCE protocols were therefore designed to run over networks that are generally lossless. (Typically, link-level flow control is used to guarantee lossless transmission in both IB and Converged Ethernet networks.) For this reason, the mechanisms for acknowledgment of packet reception and for retransmission in case of data loss in these RDMA protocols are simple: Upon failure to receive a positive acknowledgment, the transmitter retransmits all packets starting immediately after the last packet that was acknowledged by the receiver. In other words, loss of a single packet can result in duplicate transmission of many subsequent packets. In lossless networks, this inefficiency is inconsequential, but when significant numbers of loss events occur, the RDMA retransmission approach can have a negative effect on performance.

Embodiments of the present invention that are described hereinbelow provide mechanisms for selective acknowledgment and retransmission of RDMA packets, which substantially reduce the number of packets that have to be retransmitted in case of packet loss. These mechanisms are implemented autonomously by NICs that couple the participating host computers to the network and carry out the transactions, so that the host processors and operating systems are not involved in or even aware of the retransmissions. The disclosed mechanisms reduce the load on the network due to retransmissions and enable more rapid recovery from packet loss.

Generally speaking, however, implementation of selective retransmission requires that the receiving NIC be capable of handling and buffering packets that it receives out of order (OOO): When a given packet in a multi-packet RDMA transaction is lost but subsequent packets are received, the NIC has to save the subsequent packets in memory (either the host memory or a dedicated buffer) while requesting and waiting for retransmission of the lost packet. When the retransmitted packet arrives, the NIC must load all the packets into the host memory in the proper order and notify the host processor that the transaction has been completed, for example by writing a completion queue element (CQE) to the host memory.

In RDMA Write transactions, the incoming packets indicate the address range in the host memory of the responder to which the packet data are to be written, and thus provide the receiving NIC with all the information that it needs to find the appropriate "slots" for the data in the host memory even when the packets arrive out of order. The NIC can use this information to write the data that it receives from packets that arrive out of order directly to the host memory, and can thus request retransmission only of the missing packet, and not the subsequent packets. Upon receiving the retransmitted packet, the NIC writes the data to the empty slot and writes a CQE to notify the host processor that the transaction is complete. RDMA Read response packets can be handled in similar fashion.

In processing data received in Send transactions, on the other hand, the address range to which the receiving NIC must write the packet data is indicated by WQEs posted by a responder application running on the local host processor. The receiving NIC reads and consumes the WQEs in order, and then writes a corresponding CQE to the host memory for each WQE that it consumes. For this reason, if the NIC is to handle Send packets received out of order, the NIC must generally maintain its own reordering buffer, from which it writes the packet data to host memory only after all the packets in the Send transaction have arrived. This approach is costly in terms of the logic and memory resources required of the NIC. RDMA Write with Immediate transactions suffer from similar difficulties.

Embodiments of the present invention address this problem by handling lost packets selectively, depending on the type of transaction. This selectivity is invoked when a sequence of data packets is sent in a given RDMA transaction from a transmitting computer over a network to a receiving computer, and the receiving computer receives a given packet in the sequence without first having received a certain preceding packet in the sequence. The receiving computer sends a NAK packet, but the retransmission mode following the NAK depends on the transaction type: For transactions of a first type, such as RMDA Write, RDMA Read and RDMA Atomic transactions, the missing (preceding) packet is retransmitted, without retransmitting the given packet and any subsequent packets that were already transmitted. On the other hand, for transactions of a second type, such as Send and RDMA Write with Immediate transactions, the missing packet and all subsequent packets in the transaction are retransmitted. Thus, packet loss in transactions of the first type can be handled with optimal efficiency, without burdening the receiving NIC with the difficulties of packet reordering in transactions of the second type.

### SYSTEM DESCRIPTION

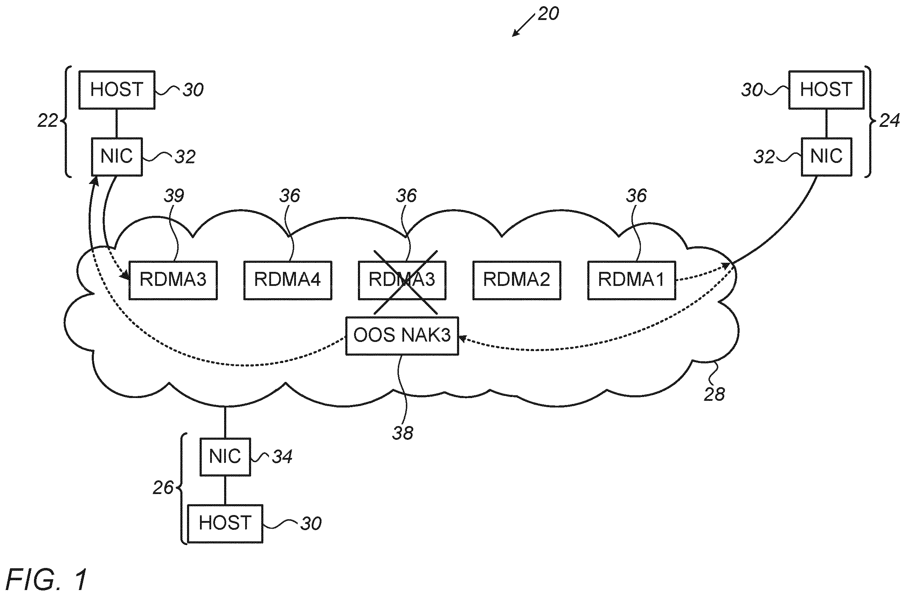

Fig. 1 is block diagram that schematically illustrates a computer system 20, in which host computers 22, 24, 26 communicate via a packet network 28, in accordance with an embodiment of the invention. Each computer 22, 24, 26 comprises a host processing subsystem 30, comprising a host processor and memory, and is coupled to network 28 by a respective NIC 32 or 34. For purposes of the description that follows, NICs 32 are assumed to support full selective retransmission and packet reordering for all types of RDMA transactions, while NIC 34 provides selective retransmission support for some types of transactions (such as RDMA Write and Read), but not for others (such as Send transactions). In the present embodiment, network 28 is assumed to be an Ethernet network, over which NICs 32, 34 exchange data using the RoCE protocol, but the principles of the present invention are equally applicable to RDMA operations carried out over other types of networks and/or using other RDMA protocols.

NICs 32 and 34 may inform one another of their capabilities in terms of retransmission support, for example by means of suitable signaling packets exchanged between the NICs before RDMA transmission begins. As a result, in communication between NICs 32, selective retransmission will be applied to all RDMA transactions, meaning that only those packets that are actually lost will be retransmitted. On the other hand in communications between NICs 32 and NIC 34, selective retransmission is applied selectively, meaning that in some cases only the packets that are actually lost will be retransmitted, whereas in other cases the lost packet and all subsequent packets will be retransmitted, depending on the transaction type. System 20 may also comprise legacy NICs, which do not support selective retransmission at all, in which case lost packets and all subsequent packets are retransmitted irrespective of the transaction type.

In the example shown in Fig. 1, NIC 32 of computer 22 sends a sequence of data packets 36 over network 28 to NIC 32 of computer 24 in an RDMA data transfer transaction. The third packet 36 in the sequence, identified in the figures as "RDMA3," is lost in transit due, for example, to congestion encountered at a switch in network 28. Consequently, NIC 32 of computer 24 receives the next packet in the sequence, labeled "RDMA4," without having previously received RDMA3. (This same sort of eventuality may also occur when RDMA4 arrives at its destination before RDMA3 due to a routing delay, for example.)

After receiving packet RDMA4 at computer 24 without previously having received RDMA3, NIC 32 of computer 24 sends an out-of-sequence (OOS) NAK packet 38 over network 28 to computer 22, indicating that it did not receive packet RDMA3. NIC 32 may send NAK packet 38 immediately upon receiving packet RDMA4, or it may wait until a certain timeout has elapsed. In this latter case, NAK packet 38 may identify multiple packets 36 in the sequence (including packet RDMA3) that were not received at computer 24. In either case, NIC 32 of computer 22 will respond by retransmitting a packet 39 that was indicated by NAK packet 38 as having been lost, without retransmitting packet RDMA4 or other packets that were not explicitly requested by NIC 32 of computer 24. Additionally or alternatively, NAK packet 38 may identify both packet RDMA3 (and possibly other packets) as not having been received and packet RDMA4 (or another packet) as the last packet 36 in the sequence that was received at computer 24.

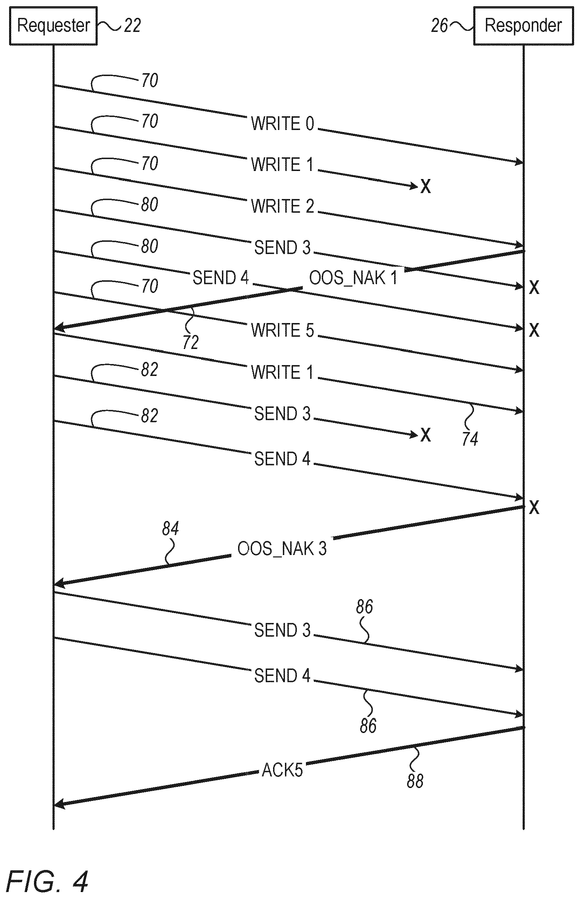

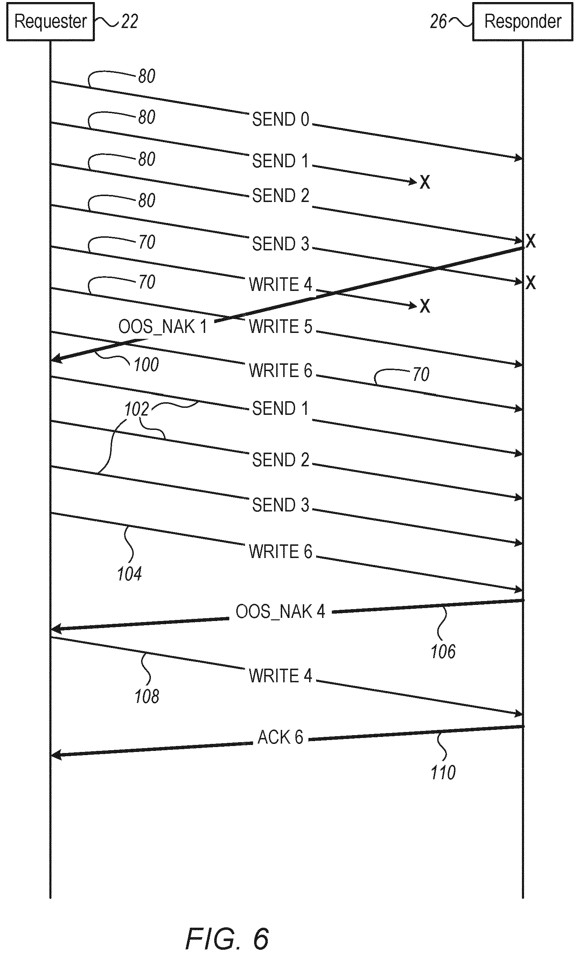

If the same transaction were carried out between computer 22 and 26, NIC 34 will likewise transmit OOS NAK packet 38 after failing to receive packet RDMA3. In the case of an RDMA Write transaction, NIC 32 of computer 22 will retransmit only packet RDMA3, as in the pictured example. On the other hand, in the case of a Send transaction, NIC 32 of computer 22 will go back in the transmission sequence to RDMA3, and will thus retransmit both RDMA3 and RDMA4. Scenarios of this sort are described in detail hereinbelow with reference to Figs. 4 and 6.

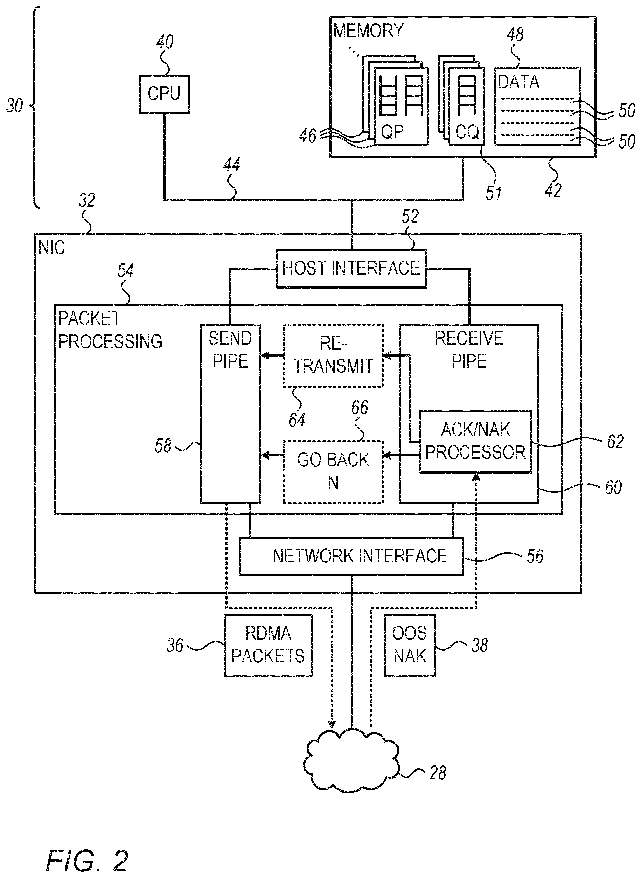

Fig. 2 is a block diagram that schematically shows details of host computer 22, and particularly NIC 32, in accordance with an embodiment of the invention. Typically, host computers 24 and 26 and their respective NICs 32 and 34 are of similar structure and functionality to that shown in Fig. 2. Host computer 22 comprises a host processing subsystem 30, comprising a host processor 40, typically comprising at least one central processing unit (CPU), and a system memory 42, linked by a peripheral component bus 44, such as a PCI Express^{®} (PCIe) bus, to NIC 32. Processes running in software on host processor 40 interact with NIC 32 by submitting work requests to NIC driver software, which places corresponding work items, known as work queue elements (WQEs), into work queues 46 in memory 42. Typically, the work queues are arranged as queue pairs (QPs), each including a send queue and a receive queue.

To initiate an RDMA transaction, such as an RDMA Write or Read transaction or a Send transaction to or from computer 24 or computer 26, host processor 40 posts a WQE in the appropriate work queue 46 and notifies NIC 32 that the WQE is awaiting execution. The WQE identifies a data buffer 48 in memory 42 from which the RDMA data are to be read by NIC 32 for transmission to computer 24 or to which the data are to be written by NIC 32 upon receipt from computer 24. When the transaction involves a large amount of data, NIC 32 will carry out the transaction by sending or receiving multiple data packets, each with a respective segment 50 of the data in buffer 48 as its payload. Upon completion of the transaction, NIC 32 posts a CQE to a completion queue 51 in memory 42, to be conveyed to the appropriate software process on host processor 40.

NIC 32 comprises a host interface 52, which connects to bus 44, and a network interface 56, with one or more ports connecting to network 28. Packet processing logic 54, coupled between host interface 52 and network interface 56, reads and executes WQEs from work queues 46, typically by direct memory access (DMA) via bus 44. A send pipe 58 generates and transmits data packets via network interface 56 to network 28 in accordance with the instructions provided by the WQEs. For example, in the case of an RDMA Write or Send request, send pipe 58 will generate one or a sequence of RDMA data packets 36, each containing its respective segment 50 of data, read by DMA from buffer 48.

A receive pipe 60 in packet processing logic 54 receives and processes data packets from network 28. In the case of incoming RDMA write or RDMA read response packets, receive pipe 60 will write the data segments contained in the packet payloads to the appropriate locations in buffer 48. When packets in a sequence are received out of order, receive pipe 60 can still write segments 50 to buffer 48 in the proper, ordered locations, but will refrain from reporting to host processor 40 that the transaction has been completed until all packets in the sequence have actually been received. (Techniques that can be used in this context for handling out-of-order RDMA packets and transactions are described, for example, in U.S. Patent 10,110,518).

Receive pipe 60 tracks packet reception, and in particular verifies that sequences of packets received in RDMA data transfer transactions arrive in order. As long as the packets are received in order, an acknowledgment engine 62, in or associated with receive pipe 60, generates ACK packets identifying the last packet that was received, and instructs send pipe 58 to send these ACK packets to the transmitting computer. On the other hand, upon receipt of a packet with a given packet serial number (PSN) in an RDMA transaction without previously having received all of the packets in the transaction with preceding sequence numbers, acknowledgment engine 62 will recognize the occurrence of an OOS event. The acknowledgment engine will then instruct send pipe 58 to send a corresponding NAK packet 38 to the transmitting computer, identifying the missing packet or packets. Example scenarios of this sort are illustrated in the figures that follow.

When an incoming NAK packet 38 is received by network interface 56, acknowledgment engine 62 parses the NAK packet in order to identify the packet or packets that were lost in transmission to computer 24, and thus the corresponding segments 50 that will require retransmission. Acknowledgment engine 62 passes a retransmission instruction to send pipe 58, causing the send pipe to read the appropriate data from buffer 48 and retransmit the requested RDMA data packets 36. The type of retransmission instruction depends on the type of transaction and the reordering capabilities of the NIC that sent NAK packet 38: If only a specific lost packet is to be retransmitted, acknowledgment engine 62 passes a packet-selective retransmission instruction 64 to send pipe 58. If all packets beginning from the lost packet are to be retransmitted, acknowledgment engine 62 passes a "go-back-N" instruction 66, meaning that send pipe 58 should go back in the transaction to the lost packet and resume transmission of all packets in order from that point. In either case, once the receiving NIC receives the retransmitted packet or packets, the RDMA transaction can be completed.

### METHODS OF OPERATION

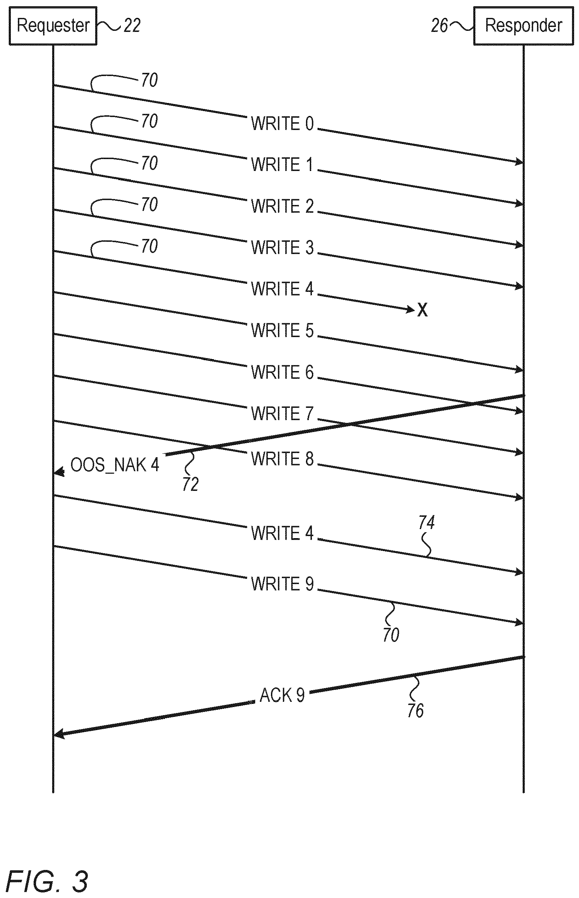

Fig. 3 is a ladder diagram that schematically illustrates a method for selective acknowledgment and retransmission of RDMA Write packets, in accordance with an embodiment of the invention. In this description and in the figures that follow, for the sake of concreteness and clarity, computer 22 is assumed to be the requester, which transmits the RDMA data packets in the RDMA write operation, while computer 26 is the responder, which receives and acknowledges the packets (as in system 20, shown in Fig. 1). It is further assumed in the transactions illustrated in Figs. 4 and 6 that NIC 34 of computer 26 supports selective retransmission of RDMA Write packets but not of Send packets. Alternatively, the roles of the two computers may be reversed, or other computers with suitably-configured NICs 32, 34 may be involved.

NIC 32 of computer 22 transmits RDMA Write packets 70 in the sequence that is shown in Fig. 3, but NIC 34 of computer 26 receives packet #5 before receiving packet #4 (which may arrive later or not at all). As NIC 32 of computer 22 is not yet aware that any packet failed to reach its destination in the proper sequence, NIC 32 continues transmission of RDMA Write packets following packet #4.

Upon receiving packet #5, NIC 34 of computer 26 sends a NAK packet 72 back to computer 22, indicating that packet #4 was not received. In the meanwhile, NIC 34 continues to receive the additional RDMA Write packets in the sequence and stores the data from these packets in memory 42 of computer 26. Upon receiving NAK packet 72, NIC 32 of computer 22 suspends transmission of further data packets, and responds to NAK packet 72 by generating and sending a retransmitted data packet 74. This retransmitted data packet is typically labeled with the same packet serial number (PSN) as the packet identified in NAK packet 72, i.e., #4 in the present example. Packet 74 is transmitted out of order, without retransmission of the subsequent RDMA Write packets (#6, #7 and #8 in this example) that were successfully received at computer 26.

After retransmitting data packet 74, NIC 32 of computer 22 completes the RDMA data transfer transaction by transmitting any further packets 70 remaining in the sequence subsequent to those already transmitted. NIC 32 need not wait for acknowledgment of retransmitted data packet 74 before resuming transmission, but rather continues transmitting packets 70 until the entire sequence has been transmitted and acknowledged. Thus, in the present example, NIC 32 of computer 22 continues by transmitting RDMA Write packet #9, which is the last packet in the sequence.

NIC 34 of computer 26 arranges the received packet data in memory 42, and returns a positive ACK packet 76 over network 28 to computer 22. ACK packet 76 typically identifies the most recent packet in the sequence that was successfully received at computer 26. Thus, in the present example, ACK packet 76 acknowledges data packet #9.

Fig. 4 is a ladder diagram that schematically illustrates a method for selective acknowledgment and retransmission of both RDMA Write and Send packets, in accordance with another embodiment of the invention. In this embodiment, NIC 32 of computer 22 transmits a sequence of RDMA Write packets 70, in an RDMA Write transaction, followed by a sequence of Send packets 80, in a Send transaction. The packets are numbered serially, for example by PSN, over the successive transactions. It is assumed that NIC 34 of computer 26 supports selective retransmission in RDMA Write transactions, but not in Send transactions, because of the difficulties in packet reordering that were explained above.

In the pictured scenario, RDMA Write packet #1 is lost in transmission. Upon receiving RDMA Write packet #2, NIC 34 of computer 26 returns NAK packet 72, reporting the loss of packet #1. In the meanwhile, computer 22 has begun the Send transaction, by transmitting Send packets #3 and #4, and then transmits a further RDMA Write packet #5 before receiving NAK packet 72. NIC 34 of computer 26 drops Send packets #3 and #4 (as indicated by the X marks in the right margin), since it does not support OOO processing of Send transactions.

After receiving NAK packet 72, NIC 32 of computer 22 retransmits RDMA Write packet #1 (retransmitted packet 74 in Fig. 4), but does not retransmit the subsequent RDMA Write packets. NIC 34 of computer 26 has informed NIC 32 that it does not support OOO reception and processing of Send transactions. Therefore, NIC 32 of computer 22 reinitiates the previous Send transaction by retransmitting Send packets 82, with their original serial numbers #3 and #4. This time, however, retransmitted Send packet #3 is lost, causing NIC 34 of computer 26 to drop the subsequent retransmitted Send packet #4 and return a further NAK packet 84 to computer 22 to report the loss of Send packet #3. In response, NIC 32 of computer 22 retransmits all packets 86 of the Send transaction, i.e., both packet #3 and packet #4.

Once NIC 34 of computer 26 has finally received retransmitted Send packets 86, it returns an ACK packet 88 to computer 22. ACK packet 88 indicates the serial number of the last RDMA packet in the sequence that was successfully received - in this case RDMA Write packet #5, having the highest PSN so far - even if it was not the most recently received.

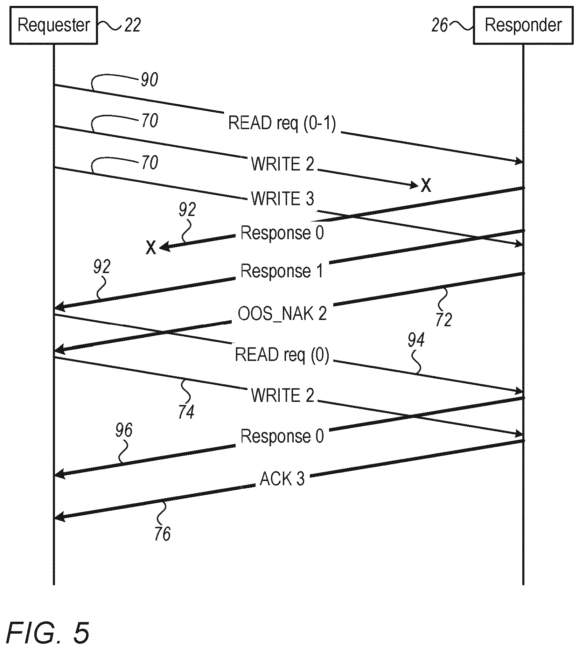

Fig. 5 is a ladder diagram that schematically illustrates a method for selective acknowledgment and retransmission of RDMA packets, in accordance with yet another embodiment of the invention. This embodiment illustrates the application of selective retransmission of both RDMA Write and RDMA Read packets. NIC 32 of computer 22 transmits an RDMA Read request packet 90 to computer 26, followed by an RDMA Write transaction includes RDMA Write packets #2 and #3. NIC 34 of computer 26 responds to RDMA Read request packet 90 by transmitting RDMA Read response packets 92, including packet #0 and packet #1. Both RDMA Write packet #2 and RDMA Read response packet #0 are lost in transit.

Upon receiving RDMA Write packet #3 without having received packet #2, NIC 34 of computer 26 transmit NAK packet 72, requesting retransmission of packet #2. In response, NIC 32 of computer 22 retransmits RDMA Write packet #2 (as retransmitted packet 74 in the diagram). Upon receiving packet 74, NIC 34 of computer 26 writes the packet data to the appropriate address in memory 42 of computer 26 and then sends ACK packet 76, acknowledging RDMA Write packet #3.

Concurrently with the RDMA Write transaction, upon receiving RDMA Read response packet #1 without having received packet #0, NIC 32 of computer 22 transmits a new RDMA Read request packet 94, this time asking only for transmission of RDMA Read response packet #0. Upon receiving packet 94, NIC 34 of computer 26 retransmits packet #0 as a retransmitted RDMA Read response packet 96. NIC 32 receives and arranges the RDMA Read data at the appropriate addresses in memory 42 of computer 22.

Fig. 6 is a ladder diagram that schematically illustrates a method for selective acknowledgment and retransmission of RDMA Write and Send packets, in accordance with a further embodiment of the invention. This embodiment addresses a problem of implementation that can arise when retransmission is handled differently in different types of RDMA transactions (such as RDMA Write and Send transactions): Because an OOS NAK in a Send transaction invokes retransmission of the lost packet and all subsequent packets in the transaction, the responder should wait to send any further OOS NAK packets until all the retransmitted packets have been received. Consequently, if another packet is lost in the interim in another, concurrent RDMA transaction, the responder will not be able to send another OOS NAK, nor will the responder be able to acknowledge successful completion of the other transaction. As a result of this deadlock, packet transmission from the requester to the responder can be stalled, typically until a lengthy timeout period has elapsed. Only then will the requester begin retransmitting packets for which it has not yet received an acknowledgment.

In the present embodiment, to avoid this sort of situation and the waste of transmission bandwidth that it entails, the requester, after completing retransmission of the sequence of Send packets, immediately retransmits a packet from the other, concurrent transaction (such as the RDMA Write transaction mentioned above) having a higher PSN than that of the retransmitted Send packets. Specifically, it is desirable that the requester retransmit the last packet in the other transaction. Upon receiving this retransmitted packet, the responder will either acknowledge all of the transmitted packets (typically with a single ACK packet indicating the highest PSN received) or will send an OOS NAK indicating the number of the earliest packet that was lost and has not yet been retransmitted.

Turning now to the example in Fig. 6, NIC 32 of computer 22 transmits Send packets 80 to computer 26. Send packet #1 is lost, causing NIC 34 of computer 26 to transmit a NAK packet 100 and to discard packets #2 and #3. Upon receiving NAK packet 100, NIC 32 of computer 22 retransmits Send packets 102, including the lost packet #1 and all subsequent packets in the transaction.

In the meanwhile, NIC 32 of computer 22 initiates an RDMA Write transaction, by transmitting RDMA Write packets 70. RDMA Write packet #4 is also lost in transit, but NIC 34 of computer 26 cannot send another OOS NAK packet as long as the previous NAK packet 100 is still in process. Therefore, to avoid the sort of deadlock explained above, after the last retransmitted Send packet 102 (packet #3) has been sent, NIC 32 of computer 22 retransmits an RDMA Write packet 104 - in this case RDMA Write packet #6, which was the last packet in the transaction that was transmitted before NIC 32 began retransmission of Send packets 102.

Upon receiving retransmitted RDMA Write packet 104, NIC 34 of computer 26 can now transmit the next OOS NAK packet 106, indicating in this case that the previous RDMA Write packet #4 was lost. In response to NAK packet 106, NIC 32 of computer 22 retransmits an RDMA Write packet 108 corresponding to the lost packet #4. NIC 34 of computer 26 receives packet 108 and responds by transmitting an ACK packet 110, indicating the serial number of the last packet received in the RDMA Write transaction - in this case packet #6. Communications between computers 22 and 24 can now continue without further interruption.

Although the examples presented in the figures show certain specific scenarios for the purpose of illustrating certain features and principles of the present invention, these features and principles may similarly be implemented in other scenarios, involving different sorts of transactions and packet transmission patterns. For example, as noted above, RDMA Write with Immediate transactions may advantageously be handled in similar fashion to Send transactions. Alternatively, other divisions of RDMA transactions into types that use selective retransmission and other types that use multi-packet "go back N" retransmission may be implemented. All such alternative modes of transaction handling are considered to be within the scope of the present invention.

It will thus be appreciated that the embodiments described above are cited by way of example, and that the present invention is not limited to what has been particularly shown and described hereinabove.

It will be understood that aspects and embodiments are described above purely by way of example, and that modifications of detail can be made within the scope of the claims.

Reference numerals appearing in the claims are by way of illustration only and shall have no limiting effect on the scope of the claims.

## Claims

1. A method for data transfer performed by a data transfer apparatus, the method comprising:
transmitting a sequence of data packets (36), including at least a first packet and a second packet transmitted subsequently to the first packet, from a first computer (22) over a network (28) to a second computer (24) in a single remote direct memory access, RDMA, data transfer transaction of a given type, selected from among first and second types of transactions;
upon receipt of the second packet at the second computer without previously having received the first packet, sending a negative acknowledgment, NAK (38), packet from the second computer over the network to the first computer, indicating that the first packet was not received;
selecting a retransmission mode responsively to the type of the transaction, such that when the transaction is of the first type, the first packet is retransmitted from the first computer to the second computer in response to the NAK packet without retransmitting the second packet, and when the transaction is of the second type, both the first and second packets are retransmitted from the first computer to the second computer in response to the NAK packet; and
in response to the NAK packet, retransmitting one or more of the data packets from the first computer to the second computer in accordance with the selected retransmission mode.

2. The method according to claim 1, wherein the transactions of the first type comprise RDMA Write (70) and Read transactions (92), the transactions of the second type comprise Send transactions (82) and RDMA Write with Immediate transactions, and the transactions of the first type further comprise RDMA Atomic transactions.

3. The method according to any preceding claim, wherein transmitting the sequence of the data packets comprises, after retransmitting the first packet in the transaction of the first type, completing the RDMA data transfer transaction by transmitting at least a third packet (39) subsequent to the second packet in the sequence from the first computer to the second computer.

4. The method according to any preceding claim, wherein retransmitting the one or more of the data packets comprises, after retransmitting the first packet in the transaction of the second type, retransmitting all of the data packets in the sequence, including the second packet, that were transmitted following the first packet.

5. The method according to any preceding claim, wherein the NAK packet indicates a first packet serial number of the first packet, and wherein retransmitting the one or more of the data packets comprises retransmitting both the first packet and at least a third packet having a third packet serial number higher than the first packet serial number so as to cause the second computer to acknowledge receipt of the third packet.

6. The method according to any preceding claim, wherein the first and second computers are connected to the network by respective first and second network interface controllers, NICs (32), and wherein the method comprises:
when the transaction is of the first type, writing data from the second packet to a memory (42) of the second computer before receiving the retransmitted first packet; and
when the transaction is of the second type, discarding the second packet that was received without previously having received the first packet, and writing the data from both the first and second packets to the memory of the second computer after receiving the retransmitted first and second packets.

7. A data transfer apparatus, comprising:
a first network interface controller, NIC (32), which couples a first computer (22) to a network (28) and is configured to transmit a sequence of data packets (36), including at least a first packet and a second packet transmitted subsequently to the first packet, from a first computer over a network to a second computer (24) in a single remote direct memory access, RDMA, data transfer transaction of a given type, selected from among first and second types of transactions; and
a second NIC (32), which couples the second computer to the network and is configured to send, upon receipt of the second packet without previously having received the first packet, a negative acknowledgment, NAK (38), packet over the network to the first computer, indicating that the first packet was not received,
wherein the first NIC is configured to select a retransmission mode responsively to the type of the transaction, such that when the transaction is of the first type, the first NIC retransmits the first packet in response to the NAK packet without retransmitting the second packet, and when the transaction is of the second type, the first NIC retransmits both the first and second packets in response to the NAK packet, and to retransmit one or more of the data packets in response to the NAK packet in accordance with the selected retransmission mode.

8. The apparatus according to claim 7, wherein the transactions of the first type comprise RDMA Write (70) and Read (92) transactions, and the transactions of the second type comprise Send (82) transactions.

9. The apparatus according to claim 8, wherein the transactions of the second type further comprise RDMA Write with Immediate transactions.

10. The apparatus according to claim 8 or 9, wherein the transactions of the first type further comprise RDMA Atomic transactions.

11. The apparatus according to any of claims 7 to 10, wherein the first NIC is configured, after retransmitting the first packet in the transaction of the first type, to complete the RDMA data transfer transaction by transmitting at least a third packet (39) subsequent to the second packet in the sequence to the second computer.

12. The apparatus according to any of claims 7 to 11, wherein the first NIC is configured, after retransmitting the first packet in the transaction of the second type, to retransmit all of the data packets in the sequence, including the second packet, that were transmitted following the first packet.

13. The apparatus according to any of claims 7 to 12, wherein the NAK packet indicates a first packet serial number of the first packet, and wherein the first NIC is configured to retransmit both the first packet and at least a third packet having a third packet serial number higher than the first packet serial number so as to cause the second NIC to acknowledge receipt of the third packet.

14. The apparatus according to any of claims 7 to 13, wherein the first NIC is configured to select the retransmission mode responsively to a capability of the second NIC to handle the data packets that are received out of order.

15. The apparatus according to any of claims 7 to 14, wherein the second NIC is configured, when the transaction is of the first type, to write data from the second packet to a memory (42) of the second computer before receiving the retransmitted first packet, and when the transaction is of the second type, to discard the second packet that was received without previously having received the first packet, and to write the data from both the first and second packets to the memory of the second computer after receiving the retransmitted first and second packets.

## Patentansprüche

1. Verfahren für die Datenübertragung, die von einer Datenübertragungseinrichtung durchgeführt wird, wobei das Verfahren Folgendes umfasst:
Übertragen einer Folge von Datenpaketen (36), die mindestens ein erstes Paket und ein zweites Paket, das im Anschluss an das erste Paket übertragen wird, enthält, von einem ersten Computer (22) über ein Netzwerk (28) an einen zweiten Computer (24) in einer einzigen Datenübertragungstransaktion mit direktem Fernspeicherzugriff, RDMA, eines gegebenen Typs, der aus einem ersten und einem zweiten Typ von Transaktionen ausgewählt wird;
bei Empfang des zweiten Pakets an dem zweiten Computer, ohne zuvor das erste Paket empfangen zu haben, Senden eines negativen Bestätigungspakets, NAK-Pakets (38), von dem zweiten Computer über das Netzwerk an den ersten Computer, das angibt, dass das erste Paket nicht empfangen wurde;
Auswählen eines erneuten Übertragungsmodus als Reaktion auf den Typ der Transaktion, sodass, wenn die Transaktion der erste Typ ist, das erste Paket von dem ersten Computer an den zweiten Computer als Reaktion auf das NAK-Paket erneut übertragen wird, ohne das zweite Paket erneut zu übertragen, und wenn die Transaktion der zweite Typ ist, sowohl das erste als auch das zweite Paket von dem ersten Computer an den zweiten Computer als Reaktion auf das NAK-Paket erneut übertragen werden; und
als Reaktion auf das NAK-Paket erneutes Übertragen eines oder mehrerer der Datenpakete von dem ersten Computer an den zweiten Computer gemäß dem ausgewählten erneuten Übertragungsmodus.

2. Verfahren nach Anspruch 1, wobei die Transaktionen des ersten Typs Transaktionen "RDMA Write" (70) und "Read" (92) umfassen, die Transaktionen des zweiten Typs Transaktionen "Send" (82) und Transaktionen "RDMA Write with Immediate" umfassen und die Transaktionen des ersten Typs ferner Transkationen "Atomic RDMA" umfassen.

3. Verfahren nach einem der vorhergehenden Ansprüche, wobei das Übertragen der Folge von Datenpaketen nach dem erneuten Übertragen des ersten Pakets in der Transaktion des ersten Typs das Abschließen der RDMA-Datenübertragungstransaktion durch Übertragen mindestens eines dritten Pakets (39) im Anschluss an das zweite Paket in der Folge von dem ersten Computer an den zweiten Computer umfasst.

4. Verfahren nach einem der vorhergehenden Ansprüche, wobei das erneute Übertragen des einen oder der mehreren Datenpakete nach dem erneuten Übertragen des ersten Pakets in der Transaktion des zweiten Typs das erneute Übertragen aller Datenpakete in der Folge, einschließlich des zweiten Pakets, umfasst, die nach dem ersten Paket übertragen wurden.

5. Verfahren nach einem der vorhergehenden Ansprüche, wobei das NAK-Paket eine erste Paketseriennummer des ersten Pakets angibt und wobei das erneute Übertragen des einen oder der mehreren Datenpakete das erneute Übertragen sowohl des ersten Pakets als auch mindestens eines dritten Pakets mit einer dritten Paketseriennummer, die höher ist als die erste Paketseriennummer, umfasst, um den zweiten Computer zu veranlassen, den Empfang des dritten Pakets zu bestätigen.

6. Verfahren nach einem der vorhergehenden Ansprüche, wobei der erste und der zweite Computer über einen jeweiligen ersten und zweiten Netzwerkschnittstellencontroller, NIC (32), mit dem Netzwerk verbunden sind, und wobei das Verfahren Folgendes umfasst:
wenn die Transaktion der erste Typ ist, Schreiben von Daten aus dem zweiten Paket in einen Arbeitsspeicher (42) des zweiten Computers vor dem Empfangen des erneut übertragenen ersten Pakets; und
wenn die Transaktion der zweite Typ ist, Verwerfen des zweiten Pakets, das empfangen wurde, ohne zuvor das erste Paket empfangen zu haben, und Schreiben der Daten sowohl des ersten als auch des zweiten Pakets in den Arbeitsspeicher des zweiten Computers nach dem Empfangen des erneut übertragenen ersten und zweiten Pakets.

7. Datenübertragungseinrichtung, die Folgendes umfasst:
einen ersten Netzwerkschnittstellencontroller, NIC (32), der einen ersten Computer (22) mit einem Netzwerk (28) koppelt und dazu konfiguriert ist, eine Sequenz von Datenpaketen (36), die mindestens ein erstes Paket und ein zweites Paket, das im Anschluss an das erste Paket übertragen wird, enthält, von einem ersten Computer über ein Netzwerk an einen zweiten Computer (24) in einer einzigen Datenübertragungstransaktion mit direktem Fernspeicherzugriff, RDMA, eines gegebenen Typs zu übertragen, der aus einem ersten und einem zweiten Typ von Transaktionen ausgewählt wird; und
einen zweiten NIC (32), der den zweiten Computer mit dem Netzwerk koppelt und dazu konfiguriert ist, bei Empfang des zweiten Pakets, ohne zuvor das erste Paket empfangen zu haben, ein negatives Bestätigungspaket, NAK-Paket (38), über das Netzwerk an den ersten Computer zu senden, das angibt, dass das erste Paket nicht empfangen wurde,
wobei der erste NIC dazu konfiguriert ist, als Reaktion auf den Typ der Transaktion einen erneuten Übertragungsmodus auszuwählen, sodass, wenn die Transaktion der erste Typ ist, der erste NIC das erste Paket als Reaktion auf das NAK-Paket erneut überträgt, ohne das zweite Paket erneut zu übertragen, und wenn die Transaktion der zweite Typ ist, der erste NIC sowohl das erste als auch das zweite Paket als Reaktion auf das NAK-Paket erneut überträgt und eines oder mehrere der Datenpakete als Reaktion auf das NAK-Paket gemäß dem ausgewählten erneuten Übertragungsmodus erneut überträgt.

8. Einrichtung nach Anspruch 7, wobei die Transaktionen des ersten Typs Transkationen "RDMA Write" (70) und "Read" (92) umfassen und die Transaktionen des zweiten Typs Transaktionen "Send" (82) umfassen.

9. Einrichtung nach Anspruch 8, wobei die Transaktionen des zweiten Typs ferner Transkationen "RDMA Write with Immediate" umfassen.

10. Einrichtung nach Anspruch 8 oder 9, wobei die Transaktionen des ersten Typs ferner Transkationen "RDMA Atomic" umfassen.

11. Einrichtung nach einem der Ansprüche 7 bis 10, wobei der erste NIC dazu konfiguriert ist, nach dem erneuten Übertragen des ersten Pakets in der Transaktion des ersten Typs die RDMA-Datenübertragungstransaktion durch Übertragen mindestens eines dritten Pakets (39) im Anschluss an das zweite Paket in der Folge an den zweiten Computer abzuschließen.

12. Einrichtung nach einem der Ansprüche 7 bis 11, wobei der erste NIC dazu konfiguriert ist, nach der erneuten Übertragung des ersten Pakets in der Transaktion des zweiten Typs alle Datenpakete in der Folge, einschließlich des zweiten Pakets, die nach dem ersten Paket übertragen wurden, erneut zu übertragen.

13. Einrichtung nach einem der Ansprüche 7 bis 12, wobei das NAK-Paket eine erste Paketseriennummer des ersten Pakets angibt und wobei der erste NIC dazu konfiguriert ist, sowohl das erste Paket als auch mindestens ein drittes Paket mit einer dritten Paketseriennummer, die höher als die erste Paketseriennummer ist, erneut zu übertragen, um den zweiten NIC zu veranlassen, den Empfang des dritten Pakets zu bestätigen.

14. Einrichtung nach einem der Ansprüche 7 bis 13, wobei der erste NIC dazu konfiguriert ist, den erneuten Übertragungsmodus für die erneute Übertragung als Reaktion auf die Fähigkeit des zweiten NIC, die Datenpakete zu verarbeiten, die außer der Reihe empfangen wurden, auszuwählen.

15. Einrichtung nach einem der Ansprüche 7 bis 14, wobei der zweite NIC dazu konfiguriert ist, wenn die Transaktion der erste Typ ist, Daten aus dem zweiten Paket in einen Arbeitsspeicher (42) des zweiten Computers zu schreiben, bevor das erneut übertragene erste Paket empfangen wird, und, wenn die Transaktion der zweite Typ ist, das zweite Paket zu verwerfen, das empfangen wurde, ohne zuvor das erste Paket empfangen wurde, und die Daten sowohl des ersten als auch des zweiten Pakets in den Arbeitsspeicher des zweiten Computers zu schreiben, nachdem das erneut übertragene erste und zweite Paket empfangen wurden.

## Revendications

1. Procédé de transfert de données réalisé par un appareil de transfert de données, le procédé consistant à :
émettre une séquence de paquets de données (36), comprenant au moins un premier paquet et un deuxième paquet émis après le premier paquet, depuis un premier ordinateur (22) sur un réseau (28) vers un second ordinateur (24) dans une seule transaction de transfert de données à accès direct en mémoire à distance (RDMA) d'un type donné, sélectionné parmi des premier et second types de transactions ;
à la réception du deuxième paquet au niveau du second ordinateur sans avoir préalablement reçu le premier paquet, envoyer un paquet d'acquittement négatif (NAK) (38), depuis le second ordinateur sur le réseau vers le premier ordinateur, indiquant que le premier paquet n'a pas été reçu ;
sélectionner un mode de réémission en réponse au type de la transaction, de telle sorte que lorsque la transaction est du premier type, le premier paquet soit réémis depuis le premier ordinateur vers le second ordinateur en réponse au paquet NAK sans réémettre le deuxième paquet, et lorsque la transaction est du second type, les premier et deuxième paquets soient tous deux réémis depuis le premier ordinateur vers le second ordinateur en réponse au paquet NAK ; et
en réponse au paquet NAK, réémettre un ou plusieurs paquets de données parmi les paquets de données depuis le premier ordinateur vers le second ordinateur selon le mode de réémission sélectionné.

2. Procédé selon la revendication 1, les transactions du premier type comprenant des transactions d'écriture (70) et de lecture (92) RDMA, les transactions du second type comprenant des transactions d'envoi (82) et des transactions d'écriture RDMA avec effet immédiat, et les transactions du premier type comprenant en outre des transactions atomiques RDMA.

3. Procédé selon l'une quelconque des revendications précédentes, l'émission de la séquence des paquets de données consistant, après la réémission du premier paquet dans la transaction du premier type, à achever la transaction de transfert de données RDMA en émettant au moins un troisième paquet (39) après le deuxième paquet dans la séquence, depuis le premier ordinateur vers le second ordinateur.

4. Procédé selon l'une quelconque des revendications précédentes, la réémission du ou des paquets de données parmi les paquets de données consistant, après la réémission du premier paquet dans la transaction du second type, à réémettre tous les paquets de données de la séquence, y compris le deuxième paquet, qui ont été émis après le premier paquet.

5. Procédé selon l'une quelconque des revendications précédentes, le paquet NAK indiquant un premier numéro de série de paquet du premier paquet, et la réémission du ou des paquets de données parmi les paquets de données consistant à réémettre à la fois le premier paquet et au moins un troisième paquet ayant un troisième numéro de série de paquet supérieur au premier numéro de série de paquet, de manière à amener le second ordinateur à accuser réception du troisième paquet.

6. Procédé selon l'une quelconque des revendications précédentes, les premier et second ordinateurs étant connectés au réseau par des premier et second dispositifs de commande d'interface de réseau (NIC) (32) respectifs, et le procédé consistant à :
lorsque la transaction est du premier type, écrire des données du deuxième paquet dans une mémoire (42) du second ordinateur avant de recevoir le premier paquet réémis ; et
lorsque la transaction est du second type, rejeter le deuxième paquet qui a été reçu sans avoir préalablement reçu le premier paquet, et écrire les données des premier et deuxième paquets dans la mémoire du second ordinateur après avoir reçu les premier et deuxième paquets réémis.

7. Appareil de transfert de données, comprenant :
un premier dispositif de commande d'interface de réseau (NIC) (32), qui couple un premier ordinateur (22) à un réseau (28) et qui est configuré pour émettre une séquence de paquets de données (36), comprenant au moins un premier paquet et un deuxième paquet émis après le premier paquet, depuis un premier ordinateur sur un réseau vers un second ordinateur (24) dans une seule transaction de transfert de données à accès direct en mémoire à distance (RDMA) d'un type donné, sélectionné parmi des premier et second types de transactions ; et
un second NIC (32), qui couple le second ordinateur au réseau et qui est configuré pour envoyer, à la réception du deuxième paquet sans avoir préalablement reçu le premier paquet, un paquet d'acquittement négatif (NAK) (38) sur le réseau vers le premier ordinateur, indiquant que le premier paquet n'a pas été reçu,
le premier NIC étant configuré pour sélectionner un mode de réémission en réponse au type de la transaction, de telle sorte que lorsque la transaction est du premier type, le premier NIC réémette le premier paquet en réponse au paquet NAK sans réémettre le deuxième paquet, et lorsque la transaction est du second type, le premier NIC réémette à la fois les premier et deuxième paquets en réponse au paquet NAK, et pour réémettre un ou plusieurs paquets de données parmi les paquets de données en réponse au paquet NAK selon le mode de réémission sélectionné.

8. Appareil selon la revendication 7, les transactions du premier type comprenant des transactions d'écriture (70) et de lecture (92) RDMA, et les transactions du second type comprenant des transactions d'envoi (82).

9. Appareil selon la revendication 8, les transactions du second type comprenant en outre des transactions d'écriture RDMA avec effet immédiat.

10. Appareil selon la revendication 8 ou 9, les transactions du premier type comprenant en outre des transactions atomiques RDMA.

11. Appareil selon l'une quelconque des revendications 7 à 10, le premier NIC étant configuré, après la réémission du premier paquet dans la transaction du premier type, pour achever la transaction de transfert de données RDMA en émettant au moins un troisième paquet (39) après le deuxième paquet dans la séquence, vers le second ordinateur.

12. Appareil selon l'une quelconque des revendications 7 à 11, le premier NIC étant configuré, après la réémission du premier paquet dans la transaction du second type, pour réémettre tous les paquets de données de la séquence, y compris le deuxième paquet, qui ont été émis après le premier paquet.

13. Appareil selon l'une quelconque des revendications 7 à 12, le paquet NAK indiquant un premier numéro de série de paquet du premier paquet, et le premier NIC étant configuré pour réémettre à la fois le premier paquet et au moins un troisième paquet ayant un troisième numéro de série de paquet supérieur au premier numéro de série de paquet, de manière à amener le second NIC à accuser réception du troisième paquet.

14. Appareil selon l'une quelconque des revendications 7 à 13, le premier NIC étant configuré pour sélectionner le mode de réémission en réponse à une capacité du second NIC à traiter les paquets de données qui sont reçus dans le désordre.

15. Appareil selon l'une quelconque des revendications 7 à 14, le second NIC étant configuré, lorsque la transaction est du premier type, pour écrire des données du deuxième paquet dans une mémoire (42) du second ordinateur avant de recevoir le premier paquet réémis, et lorsque la transaction est du second type, pour rejeter le deuxième paquet qui a été reçu sans avoir préalablement reçu le premier paquet, et pour écrire les données provenant à la fois des premier et deuxième paquets dans la mémoire du second ordinateur après avoir reçu les premier et deuxième paquets réémis.
